# EUROPÄISCHE PATENTSCHRIFT

(11) **EP 1 184 945 B1**
(45) Veröffentlichungstag und Bekanntmachung des Hinweises auf die Patenterteilung: **07.03.2007**
(21) Anmeldenummer: 00118824.2
(22) Anmeldetag: 31.08.2000
(51) Int. Cl.: H01S 3/098, H01S 3/07

(54) **Gaslaser**
Gaslaser
Laser à gaz

(43) Veröffentlichungstag der Anmeldung: 06.03.2002
(73) Patentinhaber: TRUMPF LASERTECHNIK GmbH, D-71254 Ditzingen (DE)
(72) Erfinder: Von Borstel, Michael, Dr., 74385 Pleidelsheim (DE); Geschwandner, Mark, 70839 Gerlingen (DE); Behrends, Tanja, 71254 Ditzingen (DE)
(74) Vertreter: Kohler Schmid Möbus

(56) Entgegenhaltungen:
- GB-A- 2 117 558
- US-A- 4 491 950
- US-A- 4 951 285
- US-A- 5 825 801
- PATENT ABSTRACTS OF JAPAN vol. 8, no. 115 (E-247) [1552], 29. Mai 1984 (1984-05-29) & JP 59 029481 A (SHINWA BOUEKI), 16. Februar 1984 (1984-02-16)

## Beschreibung

Die Erfindung betrifft einen Gaslaser mit einem zumindest abschnittsweise rund ausgebildeten Strahlführungsraum im Laserresonator und einer im Strahlführungsraum vorgesehenen Modenblende, mittels der aus dem Laserstrahl Moden ab einer bestimmten höheren Ordnung ausgeblendet werden, wobei die Blendenöffnung durch den lichten Innendurchmesser des runden Abschnitts des Strahlführungsraums gebildet ist, und mit einer im Laserresonator vorgesehenen Optik, wobei die Optik mindestens zwei optische Elemente aufweist, zwischen denen der runde Abschnitt des Strahlführungsraums angeordnet ist.

Ein derartiger Gaslaser ist beispielsweise durch US 4 951 285 A bekanntgeworden.

In der Regel erzeugt ein Gaslaser im Laserresonator einen für ihn charakteristischen Schwingungszustand, den sog. Mode, der im wesentlichen durch die Länge des Laserresonators, den Durchmesser der Laserrohre und die Gestaltung der Elektroden festgelegt ist. Wie ein Laser ausgelegt wird und welchen Mode er folglich erzeugt, hängt von seinem Einsatzgebiet ab. Für die Materialbearbeitung sind zwei Moden von besonderer Bedeutung - der TEM₀₀-Mode (sogenannter Gauß-Mode) und der TEM₀₁-Mode (sogenannter Ringmode). Der Gauß-Mode kann auf den kleinsten Durchmesser fokussiert werden, was beim Schneiden dünner Bleche erwünscht ist. Der Ringmode ist schlechter fokussierbar als der Gauß-Mode, so dass der

Fokusdurchmesser daher größer ist. Dies ist z.B. beim Schneiden dickerer Bleche erwünscht, damit der Schnittspalt so breit ist, dass die Schlacke ausgeblasen werden kann. In der Mitte des Ringmodes befindet sich ein Leistungsminimum, wodurch die thermische Belastung in der Mitte der optischen Elemente verringert wird - ein Effekt, der vor allem bei hohen Leistungen wichtig ist.

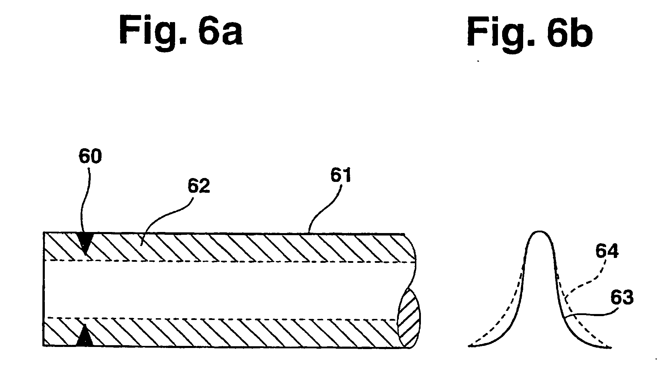

In der Vergangenheit hat es zahlreiche Versuche gegeben, bei einem Gaslaser den Mode im Laserresonator definiert einzustellen. So dient bei der EP 0 492 340 B1, wie in **Fig. 6a** gezeigt ist, eine ringförmige Modenblende **60** mit kreisförmigem Öffnungsquerschnitt im Laserrohr **61** des Laserresonators dazu, die unerwünschten Moden höherer Ordnung aus dem Laserstrahl auszublenden. Die freie Apertur der Modenblende 60 soll dann nur das Anschwingen des Gauß-Modes zulassen. Da sich auch im ausgeblendeten Teil **62** des Anregungsvolumens des Laserrohrs 61 angeregtes Lasergas befindet, kommt es auch am Rand des eigentlichen Modenvolumens zu einer unnötig großen Verstärkung und zu Beugungs- und Randfeldeffekten an der Modenblende 60. Wie in **Fig. 6b** gezeigt, führen diese Effekte statt der gewünschten scharfen gaußförmigen Verteilung **63** der Intensität des Laserlichts über den Durchmesser des Laserstrahls zu einer unerwünschten verbreiterten Intensitätsverteilung **64.**

Aus der eingangs genannten US 4,951,285 A ist ein Gaslaser bekannt, bei dem der lichte Innendurchmesser des Strahlführungsraums als Modenblende für Moden höherer Ordnung wirkt. D.h., der Strahlführungsraum bildet die Modenblende.

Aus der GB 2 117 558 A ist ebenfalls ein Gaslaser bekannt, bei dem der lichte Innendurchmesser des Strahlführungsraums als Modenblende für Moden höherer Ordnung wirkt. Allerdings bilden hier im Strahlführungsraum vorgesehene ringförmige Einschnürungen, Vorsprünge oder Einsätze die Modenblende.

Schließlich ist aus der US 5 825 801 A noch ein Gaslaser mit einer herkömmlichen Lochblende bekannt.

In jüngster Zeit gibt es auch Anstrengungen, Gaslaser zu realisieren, bei denen auf einfache Weise zwischen Gauß- und Ringmode umgeschaltet werden kann, so dass Laser flexibel für unterschiedliche Bearbeitungsaufgaben eingesetzt werden können.

Es ist die Aufgabe der Erfindung, einen Gaslaser der eingangs genannten Art derart zu verbessern, dass im Laserresonator ein möglichst scharf abgegrenzter Gauß-Mode erzeugt werden kann.

Diese Aufgabe wird erfindungsgemäß dadurch gelöst, dass von den mindestens zwei optischen Elementen das eine zur Aufweitung des Laserstrahls und das andere zur nachfolgenden Fokussierung des Laserstrahls ausgebildet ist, wobei das eine optische Element den Laserstrahl innerhalb des Strahlführungsraums auf solch einen Strahldurchmesser aufweitet, dass der lichte Innendurchmesser des runden Abschnitts des Strahlführungsraums für höhere Moden als Modenblende wirkt.

Der mit der Erfindung erzielte Vorteil besteht darin, dass sich außerhalb des durch den runden Abschnitt des Strahlführungsraums definierten Anregungsvolumens, d.h. außerhalb der Blende, kein angeregtes Lasergas mehr befindet, so dass es innerhalb des runden Abschnitts auch zu keiner unerwünschten Verstärkung kommen kann. Im Resonator wird ein scharf abgegrenzter Gauß-Mode erzeugt.

Der runde Abschnitt des Strahlführungsraums kann beispielsweise durch ein oder mehrere Laserrohre des Laserresonators und/oder durch einen zwei benachbarte Laserrohre miteinander verbindenden Verbindungsblock gebildet sein.

Bei einer bevorzugten Ausführungsform der Erfindung ist im Laserresonator eine Optik vorgesehen, die den Laserstrahl in der Öffnungsebene des runden Abschnitts des Strahlführungsraums auf einen Durchmesser aufweitet, bei dem Moden ab einer bestimmten höheren Ordnung in der Öffnungsebene aus dem Laserstrahl ausgeblendet werden. In einer anderen bevorzugten Ausführungsform der Erfindung ist im Laserresonator eine Optik vorgesehen, die den Laserstrahl innerhalb des runden Abschnitts des Strahlführungsraums auf einen Strahldurchmesser aufweitet, bei dem Moden ab einer bestimmten höheren Ordnung aus dem Laserstrahl ausgeblendet werden.

Vorzugsweise ist die Optik außerhalb des runden Abschnitts des Strahlführungsraums vorgesehen und weist mindestens zwei optische Elemente auf, zwischen denen der runde Abschnitt des Strahlführungsraums angeordnet ist. Dabei dient das eine optische Element zum Aufweiten des Laserstrahls und das andere optische Element zum Rückfokussieren des aufgeweiteten Laserstrahls.

Versuche mit einem doppelt quadratisch gefalteten Resonator haben gezeigt, dass bei mindestens zwei optischen Elementen besonders gute Ergebnisse, d.h. ein Laserstrahl im Gauß-Mode mit besonders hoher Strahlqualität, erzielt werden, wenn das eine optische Element zur Aufweitung des Laserstrahls, insbesondere konvex, und das andere optische Element zur nachfolgenden Fokussierung des Laserstrahls, insbesondere konkav, ausgebildet ist.

Versuche mit einem doppelt quadratisch gefalteten Resonator haben weiter gezeigt, dass bei mindestens drei optischen Elementen besonders gute Ergebnisse, d.h. ein Laserstrahl im Gauß-Mode mit besonders hoher Strahlqualität, erzielt werden, wenn zwei optische Elemente zur Aufweitung des Laserstrahls, insbesondere konvex, und das andere optische Elemente zur Fokussierung des Laserstrahls, insbesondere konkav, ausgebildet sind. Vorzugsweise ist der Radius des einen konkaven optischen Elements jeweils kleiner als die Radien der konvexen optischen Elemente und sind die Radien dieser konvexen optischen Elemente in etwa gleich.

Als optische Elemente können bereits im Strahlengang vorhandene Elemente des Laserresonators genutzt werden, wie z.B. der Auskoppelspiegel und/oder der Rückspiegel des Laserresonators und/oder ein oder mehrere dazwischen vorgesehene Umlenkspiegel. Wird der Rückspiegel zur Aufweitung oder zur Fokussierung genutzt, ist zu beachten, daß er in der Regel ohnehin eine Krümmung aufweist, damit der Laserresonator stabil ist. Die tatsächliche Krümmung des Rückspiegels ergibt sich dann durch einfache Addition der beiden Krümmungen unter Beachtung der jeweiligen Vorzeichen.

Besonders gute Ergebnisse, d.h. ein Laserstrahl im Gauß-Mode mit besonders hoher Strahlqualität, sind zu erreichen, wenn ein konvexer Umlenkspiegel in der Nähe des Auskoppelspiegels angeordnet oder der Auskoppelspiegel selbst konvex ist und die Radien der konvexen bzw. konkaven Spiegel im Bereich von 10m bis 60m liegen.

Von besonderem Vorteil ist es, wenn mindestens eines der optischen Elemente für eine Aufweitung des Laserstrahls im Bereich des runden Abschnitts des Strahlführungsraums aktivierbar ist und wenn eine Steuereinrichtung zum Aktivieren dieses mindestens einen optischen Elements vorgesehen ist. Diese Maßnahme ermöglicht es, durch Aktivierung des optischen Elements den Laserstrahl so aufzuweiten, daß der runde Abschnitt des Strahlführungsraums als Modenblende wirkt. Die Steuereinrichtung kann auch zur Aktivierung von mindestens einem weiteren optischen Element vorgesehen sein, das den aufgeweiteten Laserstrahl rückfokussiert.

Im einfachsten Fall kann das aktivierbare optische Element eine im Laserresonator vorgesehene konvexe Linse sein, die bei Bedarf in den Strahlengang bewegt wird. Bevorzugt sind das bzw. die aktivierbaren optischen Elemente jedoch adaptive optische Elemente wie z.B. adaptive Spiegel, deren Spiegelfläche z.B. mittels Variation des Kühlwasserdrucks verformbar ist. Die jeweils gewünschten Krümmungen der adaptiven Spiegel lassen sich über die Steuereinrichtung dann entsprechend einstellen.

Als aktivierbare optische Elemente können zum Beispiel mindestens zwei benachbarte adaptive Umlenkspiegel oder zusätzlich noch der Rückspiegel vorgesehen sein. Vorzugsweise sind als aktivierbare optische Elemente drei adaptive Umlenkspiegel vorgesehen.

Bei ganz besonders bevorzugten Ausführungsformen der Erfindung ist der Laserresonator bei aktivierter Aufweitung des Laserstrahls zur Erzeugung eines Gauß-Modes und bei deaktivierter Aufweitung zur Erzeugung eines Ringmodes ausgebildet. Diese Maßnahme ermöglicht die wahlweise Einstellung des Lasermodes mit Hilfe aufweitender und fokussierender optischer Elemente im Laserresonator, wobei der Laserstrahl durch diese optischen

Elemente so geformt wird, daß der runde Abschnitt des Strahlführungsraums des Laserresonators bei aufgeweitetem Laserstrahl selbst als Modenblende wirkt. Entsprechend der jeweiligen Bearbeitungsaufgabe kann mit Hilfe der Steuereinrichtung zwischen dem Gauß- oder dem Ringmode umgeschaltet werden. Dazu können in der Steuereinrichtung beispielsweise mindestens zwei Parametersätze hinterlegt sein, die das bzw. jedes für eine Aufweitung des Laserstrahls im Bereich des runden Abschnitts des Strahlführungsraums aktivierbare optische Element so steuern, daß im Laserresonator mit einem ersten Parametersatz der Gauß-Mode und mit einem zweiten Parametersatz der Ringmode erzeugt wird.

Die Erfindung ist in Anspruch 1 definiert. Vorteilhafte Ausführungsformen sind in den abhängigen Ansprüchen angegeben.

Weitere Vorteile der Erfindung ergeben sich aus der Beschreibung und der Zeichnung. Die gezeigten und beschriebenen Ausführungsformen sind nicht als abschließende Aufzählung zu verstehen, sondern haben vielmehr beispielhaften Charakter für die Schilderung der Erfindung.

Es zeigt:
- Fig. 1: ein erstes Ausführungsbeispiel des erfindungsgemäßen Gaslasers mit einer Optik, die den Laserstrahl in seiner Öffnungsebene in das Laserrohr auf einen Durchmesser aufweitet, bei dem bis auf den Gauß-Mode alle anderen Moden in der Öffnungsebene aus dem Laserstrahl ausgeblendet werden;
- Fig. 2: ein zweites Ausführungsbeispiel des erfindungsgemäßen Gaslasers mit einer Optik, die den Laserstrahl erst innerhalb des Laserrohrs auf den lichten Innendurchmesser des Laserrohrs aufweitet;
- Fig. 3: ein drittes Ausführungsbeispiel des erfindungsgemä-ßen Gaslasers mit zwei adaptiven optischen Elementen zur Erzeugung eines Gauß-Modes (Fig. 3a) oder eines Ringmodes (Fig. 3b);
- Fig. 4: ein viertes Ausführungsbeispiel des erfindungsgemä-ßen Gaslasers mit drei adaptiven optischen Elementen zur Erzeugung eines Gauß-Modes (Fig. 4a) oder eines Ringmodes (Fig. 4b);
- Fig. 5: ein fünftes Ausführungsbeispiel des erfindungsgemä-ßen Gaslasers mit drei adaptiven optischen Elementen zur Erzeugung eines Gauß-Modes (Fig. 5a) oder eines Ringmodes (Fig. 5b); und
- Fig. 6: eine im Laserrohr eines Gaslasers vorgesehene Mo-denblende zur Begrenzung des Laserstrahldurchmessers nach dem Stand der Technik.

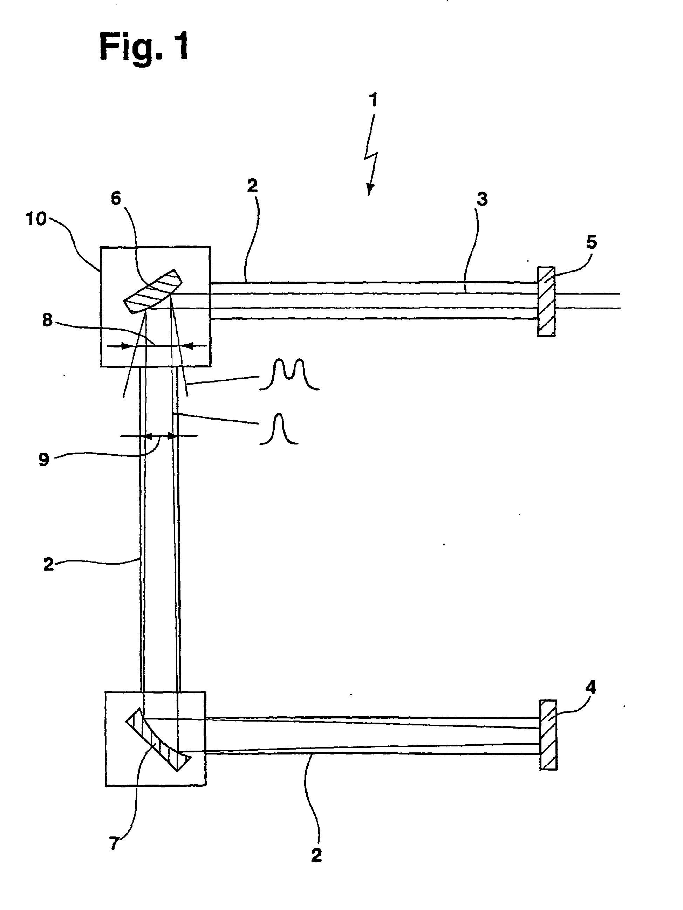

Der Laserresonator des in **Fig. 1** gezeigten Gaslasers **1** umfaßt drei Laserrohre **2,** die als Gehäuse für ein Lasergas, z.B. CO₂ oder CO, dienen. Die Laserrohre 2 haben einen runden Querschnitt und können aus Quarz oder Keramikmaterial bestehen. Zwei benachbarte Laserrohre sind jeweils im rechten Winkel zueinander angeordnet, so daß sich insgesamt eine U-förmige Anordnung ergibt. Der im Laserresonator erzeugte Laserstrahl **3** wird zwischen einem planen Rückspiegel **4** und einem planen Auskoppelspiegel **5** reflektiert und jeweils zwischen zwei Laserrohren 2 mit Hilfe von Umlenkspiegeln **6, 7** um 90° umgelenkt. Der gezeigte Strahlengang des Laserstrahls **3** ist stark vereinfacht dargestellt.

Ausgehend vom Auskoppelspiegel 5 wird der Laserstrahl 3 an dem konvex ausgebildeten Umlenkspiegel 6 so weit aufgeweitet, daß bis auf den Gaußmode alle anderen Moden des Laserstrahls 3 bereits in der Öffnungsebene in das mittlere Laserrohr 2 aus dem Laserstrahl 3 ausgeblendet werden. Der Strahldurchmesser **8** des in das mittlere Laserrohr 2 eingekoppelten Laserstrahls 3 wird so auf den Öffnungsdurchmesser **9** bzw. lichte Innendurchmesser des mitteleren Laserrohrs 2 begrenzt, d.h., das mittlere Laserrohr 2 wirkt als Modenblende. Es befindet sich kein angeregtes Lasergas außerhalb des Modenvolumens, so daß im Laserresonator ein scharf abgegrenzter Gauß-Mode erzeugt wird. An dem konkav ausgebildeten Umlenkspiegel 7 wird der aufgeweitete Laserstrahl 3 so weit rückfokussiert, daß das zwischen Umlenkspiegel 7 und Rückspiegel 4 befindliche Laserrohr 2 nicht als Modenblende für den Gaußmode wirkt. Gleiches gilt für das zwischen Auskoppelspiegel 5 und Umlenkspiegel 6 befindliche Laserrohr 2. Im gezeigten Ausführungsbeispiel sind zwei benachbarte Laserrohre 2 jeweils über einen Verbindungsblock **10,** der Teil des Laserresonators ist, miteinander verbunden.

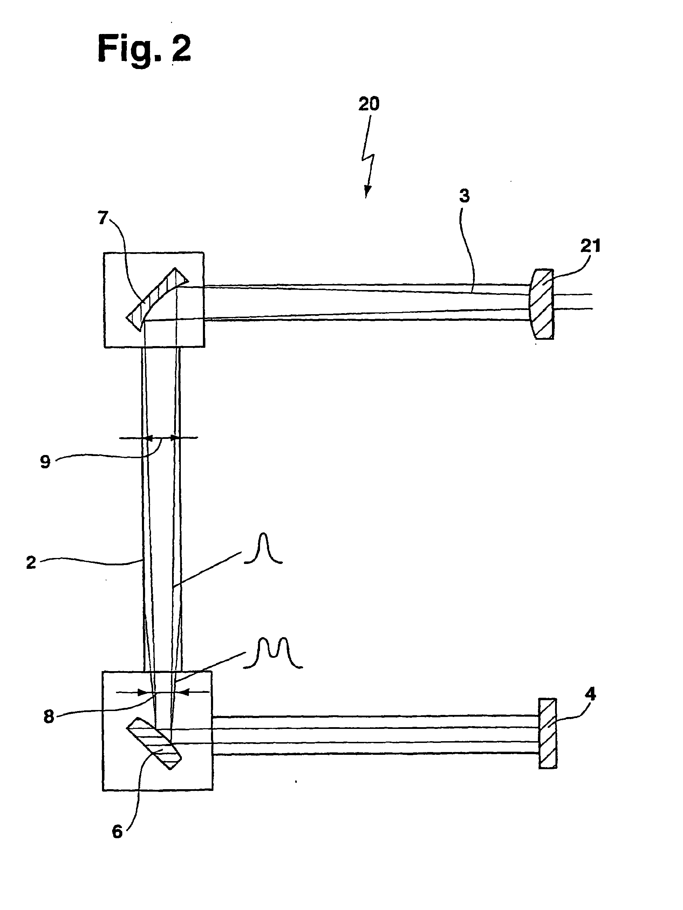

Vom Gaslaser 1 unterscheidet sich der in **Fig. 2** gezeigte Gaslaser **20** dadurch, daß der Auskoppelspiegel **21** konvex ausgebildet ist und daß der Laserstrahl erst innerhalb des mittleren Laserrohrs 2 auf den lichten Innendurchmesser 9 des Laserrohrs 2 aufgeweitet wird. Der Laserstrahl 3 tritt daher vollständig in das mittlere Laserrohr 2 ein, in dem er dann auf den Öffnungsdurchmesser 9 dieses Laserrohrs 2 begrenzt wird und somit bis auf den Gauß-Mode alle anderen Moden aus dem Laserstrahl 3 ausgeblendet werden.

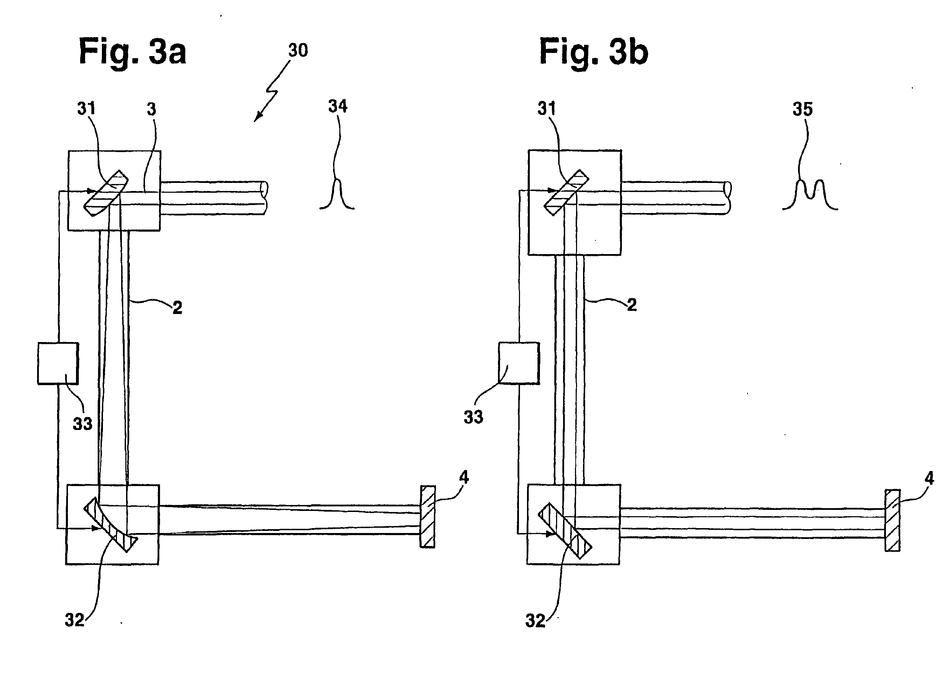

Der in **Fig. 3** gezeigte Gaslaser **30** unterscheidet sich vom Gaslaser 20 dadurch, daß die beiden Umlenkspiegel **31, 32** adaptive Spiegel mit veränderlichen Krümmungsradien sind, welche von einer Steuereinrichtung **33** einstellbar sind. In der Anordnung nach Fig. 3a sind die adaptiven Umlenkspiegel 31, 32 analog der Fig. 2 konvex bzw. konkav eingestellt, so daß das mittlere Laserrohr 2 zwischen diesen aufweitenden bzw. fokussierenden Umlenkspiegeln 31, 32 als Modenblende für den Laserstrahl 3 wirkt. Außerhalb dieser Modenblende befindet sich kein angeregtes Lasergas mehr, so daß es außerhalb der Blende zu keiner unerwünschten Verstärkung kommen kann. Es entsteht ein scharf abgegrenzter Gauß-Mode **34**. In der Anordnung nach Fig. 3b sind die adaptiven Umlenkspiegel 31, 32 als ebene Spiegel eingestellt, so daß es innerhalb des mittleren Laserrohrs 2 zu keiner Aufweitung des Laserstrahls 3 kommt. Der Laserresonator ist so ausgelegt, daß in diesem Fall ein Ringmode **35** erzeugt wird. Durch einfaches "Umschalten" der adaptiven Spiegel 31, 32 kann im Laserresonator wahlweise der Gauß-Mode 34 oder der Ringmode 35 erzeugt werden.

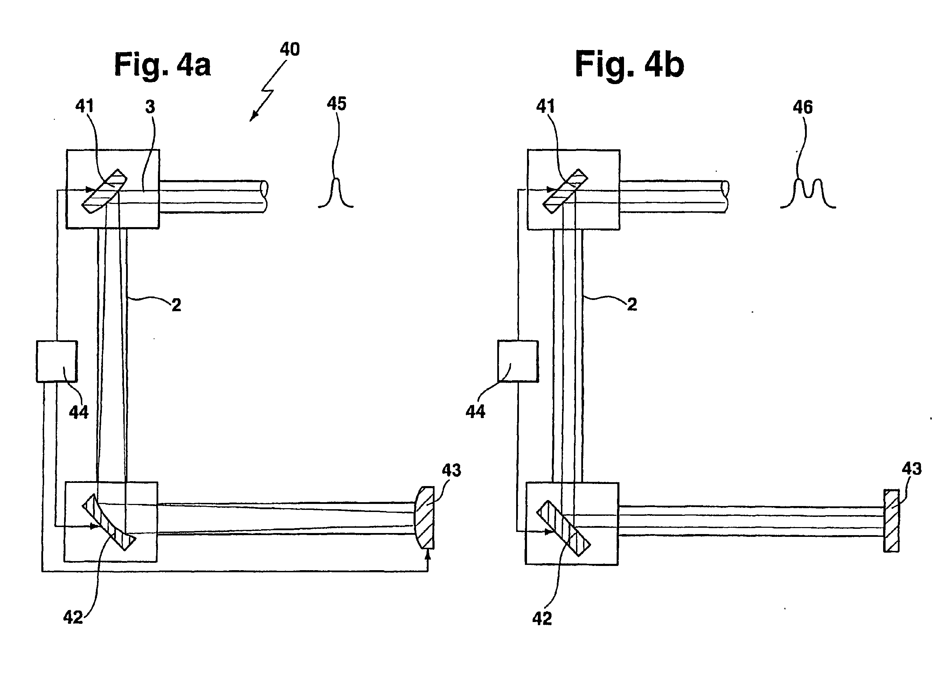

Der in Fig. 4 gezeigte Gaslaser **40** verwendet zum Umschalten zwischen Gauß-Mode und Ringmode zwei adaptive Umlenkspiegel **41, 42** und einen adaptiven Rückspiegel **43,** deren Einstellungen jeweils von der Steuereinrichtung **44** gesteuert werden. Bei der in Fig. 4a gezeigten Anordnung mit konvexen bzw. konkaven Umlenkspiegeln 41, 42 und einem konvexen Rückspiegel 43 wird der Laserstrahl 3 im mittleren Laserrohr 2 für eine Modenbegrenzung aufgeweitet und daher im Laserresonator ein Gauß-Mode **45** erzeugt. In der Anordnung nach Fig. 4b sind die Umlenkspiegel 41, 42 und der Rückspiegel 43 als ebene Spiegel eingestellt, so daß es innerhalb des mittleren Laserrohrs 2 zu keiner Aufweitung des Laserstrahls 3 kommt. Der Laserresonator ist so ausgelegt, daß in diesem Fall ein Ringmode **46** erzeugt wird. Durch einfaches "Umschalten" der adaptiven Spiegel 41, 42, 43 kann im Laserresonator wahlweise der Gauß-Mode 45 oder der Ringmode 46 erzeugt werden.

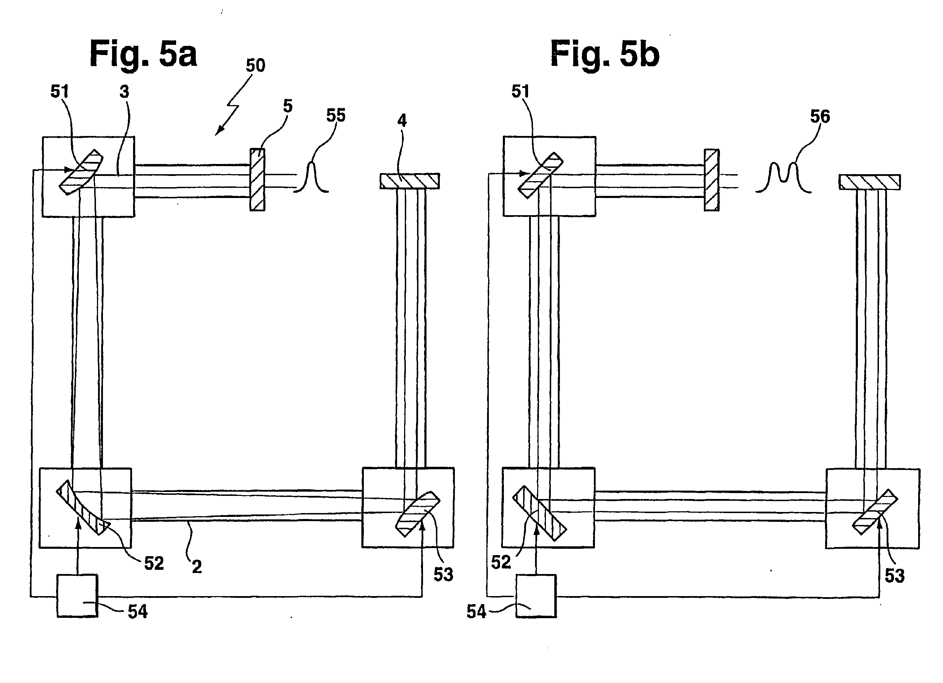

Der in Fig. 5 gezeigte Gaslaser **50** verwendet zum Umschalten zwischen Gauß-Mode und Ringmode drei adaptive Umlenkspiegel 51, 52, 53, deren Einstellungen jeweils von der Steuereinrichtung 54 gesteuert werden. Bei der in Fig. 5a gezeigten Anordnung mit konvexen Umlenkspiegeln 51, 53 und einem konkaven Umlenkspiegel 52 wird der Laserstrahl 3 im Laserrohr 2 für eine Modenbegrenzung aufgeweitet und daher im Laserresonator ein Gauß-Mode **55** erzeugt. Die Krümmungsradien der Umlenkspiegel 51, 52, 53 sind so gewählt, daß sich astigmatische Fehler kompensieren. In der Anordnung nach Fig. 5b sind alle Umlenkspiegel 51, 52, 53 als ebene Spiegel eingestellt, so daß es innerhalb des Laserrohrs 2 zu keiner Aufweitung des Laserstrahls 3 kommt. Der Laserresonator ist so ausgelegt, daß in diesem Fall ein Ringmode 56 erzeugt wird. Durch einfaches "Umschalten" der adaptiven Spiegel 51, 52, 53 kann im Laserresonator wahlweise der Gauß-Mode 55 oder der Ringmode 56 erzeugt werden.

## Patentansprüche

1. Gaslaser (1; 20; 30; 40; 50) mit einem zumindest abschnittsweise rund ausgebildeten Strahlführungsraum im Laserresonator und einer im Strahlführungsraum vorgesehenen Modenblende, mittels der aus dem Laserstrahl (3) Moden ab einer bestimmten höheren Ordnung ausgeblendet werden, wobei die Blendenöffnung durch den lichten Innendurchmesser (9) des runden Abschnitts des Strahlführungsraums gebildet ist, und mit einer im Laserresonator vorgesehenen Optik, wobei die Optik mindestens zwei optische Elemente (6, 7; 31, 32; 41, 42; 52, 53) aufweist, zwischen denen der runde Abschnitt des Strahlführungsraums angeordnet ist,
**dadurch gekennzeichnet,**
**dass** von den mindestens zwei optischen Elementen das eine (6; 31; 41; 53) zur Aufweitung des Laserstrahls (3) und das andere (7; 32; 42; 52) zur nachfolgenden Fokussierung des Laserstrahls (3) ausgebildet ist, wobei das eine optische Element den Laserstrahl (3) innerhalb des Strahlführungsraums auf solch einen Strahldurchmesser (8) aufweitet, dass der lichte Innendurchmesser (9) des runden Abschnitts des Strahlführungsraums für höhere Moden als Modenblende wirkt.

2. Gaslaser nach Anspruch 1, **dadurch gekennzeichnet, dass** der runde Abschnitt des Strahlführungsraums durch ein oder mehrere Laserrohre (2) des Laserresonators und/oder durch einen zwei benachbarte Laserrohre (2) miteinander verbindenden Verbindungsblock (10) gebildet ist.

3. Gaslaser nach Anspruch 1 oder 2, **gekennzeichnet durch** eine im Laserresonator vorgesehene Optik, die den Laserstrahl (3) in der Öffnungsebene des runden Abschnitts des Strahlführungsraums auf einen Durchmesser aufweitet, bei dem Moden ab einer bestimmten höheren Ordnung in der Öffnungsebene aus dem Laserstrahl (3) ausgeblendet werden.

4. Gaslaser nach Anspruch 1 oder 2, **gekennzeichnet durch** eine im Laserresonator vorgesehene Optik, die den Laserstrahl (3) innerhalb des runden Abschnitts des Strahlführungsraums auf einen Strahldurchmesser (8) aufweitet, bei dem Moden ab einer bestimmten höheren Ordnung aus dem Laserstrahl (3) ausgeblendet werden.

5. Gaslaser nach einem der vorhergehenden Ansprüche, **dadurch gekennzeichnet, dass** die Optik außerhalb des runden Abschnitts des Strahlführungsraums vorgesehen ist.

6. Gaslaser nach einem der vorhergehenden Ansprüche, **dadurch gekennzeichnet, dass** mindestens drei optische Elemente vorgesehen sind, von denen zwei (6, 21; 41, 43; 51, 53) zur Aufweitung des Laserstrahls (3), insbesondere konvex, und das andere (7; 42) zur Fokussierung des Laserstrahls (3), insbesondere konkav, ausgebildet sind.

7. Gaslaser nach Anspruch 6, **dadurch gekennzeichnet, dass** der Radius des einen konkaven optischen Elements (7; 42; 52) jeweils kleiner als die Radien der konvexen optischen Elemente (6, 21; 41, 43; 51, 53) ist.

8. Gaslaser nach Anspruch 6 oder 7, **dadurch gekennzeichnet, dass** die Radien der beiden konvexen optischen Elemente (6, 21; 41, 43; 51, 53) in etwa gleich sind.

9. Gaslaser nach einem der vorhergehenden Ansprüche, **dadurch gekennzeichnet, dass** als optische Elemente der Auskoppelspiegel (5; 21) des Laserresonators und/oder der Rückspiegel (4; 43) des Laserresonators und/oder ein oder mehrere dazwischen vorgesehene Umlenkspiegel (6, 7; 31, 32; 41, 42; 51, 52, 53) vorgesehen sind.

10. Gaslaser nach Anspruch 9, **dadurch gekennzeichnet, dass** ein konvexer Umlenkspiegel (6; 51) in der Nähe des Auskoppelspiegels (5; 21) angeordnet ist.

11. Gaslaser nach Anspruch 9 oder 10, **dadurch gekennzeichnet, dass** der Auskoppelspiegel (21) konvex ausgebildet ist.

12. Gaslaser nach einem der vorhergehenden Ansprüche, **dadurch gekennzeichnet, dass** mindestens eines (31; 41, 43; 51, 53) der optischen Elemente für eine Aufweitung des Laserstrahls (3) im Bereich des runden Abschnitts des Strahlführungsraums aktivierbar ist und dass eine Steuereinrichtung (33; 44; 54) zum Aktivieren dieses mindestens einen optischen Elements (31; 41, 43; 51, 53) vorgesehen ist.

13. Gaslaser nach Anspruch 12, **dadurch gekennzeichnet, dass** die Steuereinrichtung (33; 44; 54) auch zur Aktivierung mindestens eines den aufgeweiteten Laserstrahl (3) fokussierenden optischen Elements (32; 42; 52) vorgesehen ist.

14. Gaslaser nach Anspruch 12 oder 13, **dadurch gekennzeichnet, dass** das bzw. die aktivierbaren optischen Elemente (31, 32; 41, 42, 43; 51, 52, 53) adaptive optische Elemente sind.

15. Gaslaser nach Anspruch 13, **dadurch gekennzeichnet, dass** als aktivierbare optische Elemente mindestens zwei benachbarte adaptive Umlenkspiegel (31, 32; 41, 42; 51, 52, 53) vorgesehen sind.

16. Gaslaser nach Anspruch 14, **dadurch gekennzeichnet, dass** als adaptive optische Elemente zwei benachbarte Umlenkspiegel (41, 42) und der Rückspiegel (43) vorgesehen sind.

17. Gaslaser nach Anspruch 14 oder 15, **dadurch gekennzeichnet, dass** als aktivierbare optische Elemente drei adaptive Umlenkspiegel (51, 52, 53) vorgesehen sind.

18. Gaslaser nach einem der Ansprüche 12 bis 17, **dadurch gekennzeichnet, dass** der Laserresonator bei aktivierter Aufweitung des Laserstrahls (3) zur Erzeugung eines Gauß-Modes (34; 45; 55) und bei deaktivierter Aufweitung zur Erzeugung eines Ringmodes (35; 46; 56) ausgebildet ist.

19. Gaslaser nach einem der Ansprüche 12 bis 18, **dadurch gekennzeichnet, dass** in der Steuereinrichtung (33; 44; 54) mindestens zwei Parametersätze hinterlegt sind, die das mindestens eine für eine Aufweitung des Laserstrahls (3) im Bereich des runden Abschnitts des Strahlführungsraums aktivierbare optische Element (31; 41, 43; 51, 53) so steuern, dass im Laserresonator mit einem ersten Parametersatz ein Gauß-Mode (34; 45; 55) und mit einem zweiten Parametersatz ein Ringmode (35; 46; 56) erzeugt wird.

## Claims

1. Gas laser (1; 20; 30; 40; 50) having in the laser resonator a beam guiding chamber that is round at least in portions, and having a mode aperture provided in the beam guiding chamber, by means of which mode aperture modes of and above a given higher order are masked out of the laser beam (3), wherein the aperture opening is formed by the clear inside diameter (9) of the round portion of the beam guiding chamber, and having an optical system provided in the laser resonator, wherein the optical system has at least two optical elements (6, 7; 31, 32; 41, 42; 52, 53) between which the round portion of the beam guiding chamber is disposed,
**characterised in**
**that** of the at least two optical elements one (6; 31; 41; 53) is configured for expanding the laser beam (3) and the other (7; 32; 42; 52) is configured for subsequently focusing the laser beam (3), wherein the one optical element expands the laser beam (3) within the beam guiding chamber to such a beam diameter (8) that the clear inside diameter (9) of the round portion of the beam guiding chamber acts as a mode aperture for higher modes.

2. Gas laser according to claim 1, **characterised in that** the round portion of the beam guiding chamber is formed by one or more laser tubes (2) of the laser resonator and/or by a connecting block (10) connecting two adjacent laser tubes (2) to each other.

3. Gas laser according to claim 1 or 2, **characterised by** an optical system provided in the laser resonator, which optical system expands the laser beam (3) in the plane of the opening in the round portion of the beam guiding chamber to a diameter at which modes of and above a given higher order are masked out of the laser beam (3) in the plane of the opening.

4. Gas laser according to claim 1 or 2, **characterised by** an optical system provided in the laser resonator, which optical system expands the laser beam (3) within the round portion of the beam guiding chamber to a beam diameter (8) at which modes of and above a given higher order are masked out of the laser beam (3).

5. Gas laser according to any one of the preceding claims, **characterised in that** the optical system is provided outside the round portion of the beam guiding chamber.

6. Gas laser according to any one of the preceding claims, **characterised in that** at least three optical elements are provided, of which two (6, 21; 41, 43; 51, 53) are configured to expand the laser beam (3), especially being convex, and the other (7; 42) is configured to focus the laser beam (3), especially being concave.

7. Gas laser according to claim 6, **characterised in that** the radius of the one concave optical element (7; 42; 52) is in each case smaller that the radii of the convex optical elements (6, 21; 41, 43; 51, 53).

8. Gas laser according to claim 6 or 7, **characterised in that** the radii of the two convex optical elements (6, 21; 41, 43; 51, 53) are approximately identical.

9. Gas laser according to any one of the preceding claims, **characterised in that** the output mirror (5; 21) of the laser resonator and/or the retro-mirror (4; 43) of the laser resonator and/or one or more deflecting mirrors (6, 7; 31, 32; 41, 42; 51, 52, 53) provided therebetween are provided as optical elements.

10. Gas laser according to claim 9, **characterised in that** a convex deflecting mirror (6; 51) is disposed in the vicinity of the output mirror (5; 21).

11. Gas laser according to claim 9 or 10, **characterised in that** the output mirror (21) is convex.

12. Gas laser according to any one of the preceding claims, **characterised in that** at least one (31; 41, 43; 51, 53) of the optical elements is activatable for expanding the laser beam (3) in the region of the round portion of the beam guiding chamber and a control device (33; 44; 54) is provided for activating that at least one optical element (31; 41, 43; 51, 53).

13. Gas laser according to claim 12, **characterised in that** the control device (33; 44; 45) is also provided for activating at least one optical element (32; 42; 52) that focuses the expanded laser beam (3).

14. Gas laser according to claim 12 or 13, **characterised in that** the activatable optical element(s) (31, 32; 41, 42, 43; 51, 52, 53) are adaptive optical elements.

15. Gas laser according to claim 13, **characterised in that** at least two adjacent adaptive deflecting mirrors (31, 32; 41, 42; 51, 52, 53) are provided as activatable optical elements.

16. Gas laser according to claim 14, **characterised in that** two adjacent deflecting mirrors (41, 42) and the retro-mirror (43) are provided as adaptive optical elements.

17. Gas laser according to claim 14 or 15, **characterised in that** three adaptive deflecting mirrors (51, 52, 53) are provided as activatable optical elements.

18. Gas laser according to any one of claims 12 to 17, **characterised in that** the laser resonator is configured to produce a Gaussian mode (34; 45; 55) when expansion of the laser beam (3) is activated and to produce a ring mode (35; 46; 56) when expansion is deactivated.

19. Gas laser according to any one of claims 12 to 18, **characterised in that** at least two parameter sets are stored in the control device (33; 44; 54), which parameter sets control the at least one optical element (31; 41, 43; 51, 53) that is activatable for expansion of the laser beam (3) in the region of the round portion of the beam guiding chamber in such a manner that, in the laser resonator, a Gaussian mode (34; 45; 55) is produced with a first parameter set and a ring mode (35; 46; 56) is produced with a second parameter set.

## Revendications

1. Laser à gaz (1 ; 20 ; 30 ; 40 ; 50) comprenant une chambre de guidage de faisceau de forme circulaire au moins par sections dans le résonateur laser et un diaphragme de mode prévu dans le résonateur laser, au moyen duquel des modes à partir d'un certain ordre supérieur sont supprimés du faisceau laser (3), l'ouverture de diaphragme étant formée par le diamètre intérieur libre (9) de la section ronde de la chambre de guidage de faisceau, et comprenant une optique prévue dans le résonateur laser, l'optique présentant au moins deux éléments optiques (6, 7 ; 31, 32 ; 41, 42 ; 52, 53) entre lesquels la section ronde de là chambre de guidage de faisceau est disposée,
**caractérisé en ce que**
sur les au moins deux éléments optiques, l'un (6 ; 31 ; 41 ; 53) est conçu pour élargir le faisceau laser (3) et l'autre pour focaliser ensuite le faisceau laser (3), le premier élément optique élargissant le faisceau laser (3) à l'intérieur de la chambre de guidage de faisceau à un diamètre de faisceau (8) tel que le diamètre intérieur libre (9) de la section ronde de la chambre de guidage de faisceau fasse fonction de diaphragme de mode pour les modes supérieurs.

2. Laser à gaz selon la revendication 1, **caractérisé en ce que** la section ronde de la chambre de guidage de faisceau est formée par un ou plusieurs tubes laser (2) du résonateur laser et/ou par un bloc de jonction (10) joignant deux tubes laser (2) adjacents.

3. Laser à gaz selon la revendication 1 ou 2, **caractérisé par** une optique prévue dans le résonateur laser qui élargit le faisceau laser (3) dans le plan d'ouverture de la section ronde de la chambre de guidage de faisceau à un diamètre auquel les modes à partir d'un certain ordre supérieur sont supprimés du faisceau laser (3).

4. Laser à gaz selon la revendication 1 ou 2, **caractérisé par** une optique prévue dans le résonateur laser qui élargit le faisceau laser (3) à l'intérieur de la section ronde de la chambre de guidage de faisceau à un diamètre de faisceau (8) auquel les modes à partir d'un certain ordre supérieur sont supprimés du faisceau laser (3).

5. Laser à gaz selon l'une des revendications précédentes, **caractérisé en ce que** l'optique est prévue à l'extérieur de la section ronde de la chambre de guidage de faisceau.

6. Laser à gaz selon l'une des revendications précédentes, **caractérisé en ce qu'**il est prévu au moins trois éléments optiques dont deux (6, 21 ; 41, 43 ; 51, 53) servant à élargir le faisceau laser (3) sont en particulier de forme convexe et l'autre (7 ; 42) servant à focaliser le faisceau laser (3) est en particulier de forme concave.

7. Laser à gaz selon la revendication 6, **caractérisé en ce que** le rayon de l'élément optique concave (7 ; 42 ; 52) est plus petit que les rayons des éléments optiques convexes (6, 21 ; 41, 43 ; 51, 53).

8. Laser à gaz selon la revendication 6 ou 7, **caractérisé en ce que** les rayons des deux éléments optiques convexes (6, 21 ; 41, 43 ; 51, 53) sont à peu près égaux.

9. Laser à gaz selon l'une des revendications précédentes, **caractérisé en ce qu'**il est prévu comme éléments optiques le miroir de sortie (5 ; 21) du résonateur laser et/ou le miroir de renvoi (4 ; 43) du résonateur laser et/ou un ou plusieurs miroirs de déviation (6, 7 ; 31, 32 ; 41, 42 ; 51, 52, 53) prévus entre les deux.

10. Laser à gaz selon la revendication 9, **caractérisé en ce qu'**un miroir de déviation convexe (6 ; 51) est disposé à proximité du miroir de sortie (5 ; 21).

11. Laser à gaz selon la revendication 9 ou 10, **caractérisé en ce que** le miroir de sortie (21) est de forme convexe.

12. Laser à gaz selon l'une des revendications précédentes, **caractérisé en ce qu'**au moins un (31 ; 41, 43 ; 51, 53) des éléments optiques est activable pour un élargissement du faisceau laser (3) au niveau de la section ronde de la chambre de guidage de faisceau et qu'il est prévu un dispositif de commande (33 ; 44 ; 54) pour l'activation dudit au moins un élément optique (31 ; 41, 43 ; 51, 53).

13. Laser à gaz selon la revendication 12, **caractérisé en ce que** le dispositif de commande (33 ; 44 ; 54) est prévu aussi pour l'activation d'au moins un élément optique (32 ; 42 ; 52) focalisant le faisceau laser (3) élargi.

14. Laser à gaz selon la revendication 12 ou 13, **caractérisé en ce que** le ou les élément(s) optique(s) activable(s) (31, 32 ; 41, 42, 43 ; 51, 52, 53) est ou sont un ou des élément(s) optique(s) adaptatif(s).

15. Laser à gaz selon la revendication 13, **caractérisé en ce qu'**il est prévu au moins deux miroirs de déviation adaptatifs adjacents (31, 32 ; 41, 42, 43 ; 51, 52, 53) comme éléments optiques activables.

16. Laser à gaz selon la revendication 14, **caractérisé en ce qu'**il est prévu au moins deux miroirs de déviation adjacents (41, 42) et le miroir de renvoi (43) comme éléments optiques adaptatifs.

17. Laser à gaz selon la revendication 14 ou 15, **caractérisé en ce qu'**il est prévu trois miroirs de déviation adaptatifs (51, 52, 53) comme éléments optiques activables.

18. Laser à gaz selon l'une des revendications 12 à 17, **caractérisé en ce que** le résonateur laser est conçu pour générer un mode gaussien (34 ; 45 ; 55) quand l'élargissement du faisceau laser (3) est activé et pour générer un mode annulaire (35 ; 46 ; 56) quand l'élargissement est désactivé.

19. Laser à gaz selon l'une des revendications 12 à 18, **caractérisé en ce que** sont enregistrés dans le dispositif de commande (33 ; 44 ; 54) au moins deux jeux de paramètres qui commandent ledit au moins un élément optique (31 ; 41, 43 ; 51, 53) activable pour un élargissement du faisceau laser (3) au niveau de la section ronde de la chambre de guidage de faisceau de manière à générer dans le résonateur laser un mode gaussien (34 ; 45 ; 55) avec un premier jeu de paramètres et un-mode annulaire (35 ; 46 ; 56) avec un deuxième jeu de paramètres.
